# FASCICULE DE BREVET EUROPEEN

(11) **EP 2 125 994 B1**
(45) Date de publication et mention de la délivrance du brevet: **13.10.2010**
(21) Numéro de dépôt: 08762180.1
(22) Date de dépôt: 29.02.2008
(51) Int. Cl.: C10B 49/04, C10B 53/02, B27K 3/00, C10L 5/44, F23G 7/10, A62D 3/40

(54) **PROCEDE DE FABRICATION DE CHARBON VEGETAL A HAUTE TENEUR EN CARBONE ET L'INSTALLATION DE MISE EN OEUVRE DU PROCEDE**
VERFAHREN ZUR HERSTELLUNG VON PFLANZENKOHLE MIT HOHEM KOHLENSTOFFANTEIL UND PFLANZE ZUR DURCHFÜHRUNG DIESES VERFAHRENS
METHOD FOR PRODUCING VEGETABLE CARBON WITH HIGH CARBON CONTENT AND PLANT FOR CARRYING OUT SAID METHOD

(30) Priorité: 01.03.2007 FR 0753581
(43) Date de publication de la demande: 02.12.2009
(73) Titulaire: Thermya, 33140 Villenave d'Ornon (FR)
(72) Inventeur: MATEOS, David, F-33600 Pessac (FR)
(74) Mandataire: Dupuis, François
(86) Numéro de dépôt international: PCT/FR2008/050349
(87) Numéro de publication internationale: WO 2008/116993

(56) Documents cités:
- WO-A-96/38515
- WO-A-2007/000548
- US-A- 4 037 543
- HELSEN L ET AL: "Total recycling of CCA treated wood waste by low-temperature pyrolysis" WASTE MANAGEMENT, ELSEVIER, NEW YORK, NY, US, vol. 18, no. 6-8, octobre 1998 (1998-10), pages 571-578, XP004158825 ISSN: 0956-053X
- HERY J: "A complete industrial process to recycle CCA-treated wood" ENVIRONMENTAL IMPACTS OF PRESERVATIVE-TREATED WOOD, XX, XX, 8 février 2004 (2004-02-08), pages 313-322, XP002346050

## Description

L'invention se rattache au secteur technique de la production et du traitement des matériaux organiques ou végétaux agricoles non alimentaire en vue de la récupération du carbone en vue de son recyclage.

Le demandeur a acquis une solide expertise et détient un savoir faire important dans le cadre de production de carbone pour valorisation des solides organiques. Le demandeur est notamment titulaire de nombreux brevets déposés au plan international à partir des brevets FR n° 2.734.741, n° 2.885.909, n° 2.888.230. Le demandeur est ainsi amené, à partir des procédés et installations décrits dans ces documents, à produire du carbone sous forme d'éléments solides à très haute teneur en carbone.

Le demandeur a été amené, dans le cadre de sa recherche développement, à s'intéresser aussi au devenir de la biomasse non alimentaire comme les déchets végétaux agricoles qui ont une teneur en carbone non négligeable et généralement non ou peu réutilisée.

La demande du demandeur est partie d'une situation de fait actuellement qui est l'utilisation des bioénergies pour diminuer la dépendance énergétique d'un pays ou groupe de pays par rapport au pétrole. Chacun sait que le pétrole est une énergie, dans les prochaines années, amenée à diminuer, voire à disparaître si l'on considère la demande mondiale toujours plus importante et les réserves qui ne sont plus inépuisables. On s'oriente donc vers la recherche de produits de substitution et les bioénergies sont une possibilité de répondre à cette attente.

Le problème est que la production de bioénergies se focalise en grande partie sur les cultures céréalières et oléagineuses qui sont actuellement essentiellement, et même quasi exclusivement, destinées à la consommation alimentaire des populations. Ces cultures céréalières et oléagineuses ont une valeur ajoutée qui dépend du marché. Or, si l'on transfère ces cultures dans des applications autres tels que les biocarburants par synthèse, il risque, à terme, compte tenu des valeurs ajoutées beaucoup plus importantes, d'arriver à une déstabilisation du marché agro alimentaire et une paupérisation de la nourriture potentielle de la population dû au déficit provoqué par la fabrication de biocarburants. En effet, la fabrication de ceux-ci exige des surfaces à cultiver considérables. En d'autres termes, si l'on poursuit dans cette voie, on s'achemine vers des situations conflictuelles d'intérêts antagonistes très importants au détriment de la priorité de base qui est celle de l'alimentation des personnes.

C'est donc dans ce contexte que le demandeur, en tenant compte de sa propre connaissance de la production de carbone à partir de solides organiques, s'est intéressé à la production de charbon végétal, c'est-à-dire à la production de charbon à partir de biomasse agricole non alimentaire en vue de participer ensuite, dans une application avantageuse, à l'intégration de cette matière carbonée pour la production de biocarburants de synthèse.

En d'autres termes, la démarche du demandeur a été de mettre au point un procédé de fabrication de charbon dit végétal à partir de biomasse agricole non alimentaire . En effet, la biomasse agricole non alimentaire, dans le Monde, est considérable en volume, toujours en reproduction d'une année sur l'autre, en créant une source quasiment inépuisable de matières premières sans gêner ou épuiser les terres arables qui, elles, sont limitées.

Le transfert des connaissances qui résultent notamment des différents brevets antérieurs du demandeur, ainsi que rappelé précédemment, n'est pas applicable au traitement de biomasse agricole non alimentaire pour l'obtention de charbon végétal. Les recherches entreprises par le demandeur ont abouti à la production de charbon dit végétal en introduisant d'autres paramètres de production totalement inexistants dans la technologie connue précitée. Il a donc fallu mettre en oeuvre un autre procédé optimisé par rapport à l'art antérieur avec, en conséquence, une installation différenciée.

Selon une première caractéristique de l'invention, le procédé est remarquable en ce qu'il met en oeuvre les phases suivantes :
a) l'amorçage
   - charthérisation qui est une distillation pyrolytique étagée de la biomasse correspondant à la partie organique de la matière due à la circulation des gaz chauds dans la colonne du réacteur, avec évacuation de la biomasse traitée par la base du réacteur, lorsque la température T2 de la couche de matière au dessus de la grille, en regard du fond du réacteur, atteint la température T1 comprise entre 350°C et 400°C des gaz provenant du générateur de gaz chauds,
b) la transition
   - mise en oeuvre progressive dans une phase de transition de l'introduction d'air pour l'enrichissement en oxygène des gaz chauds en provenance du générateur, l'adjonction d'air permettant d'oxyder les composants volatiles se trouvant en bas de la colonne au niveau de la grille et ayant pour fonctionnalité, d'une part, de diminuer la température des gaz du générateur T1 et d'augmenter la température T2 ainsi que la quantité de gaz dus à l'oxydation des matières organiques et, d'autre part, de provoquer une accélération du processus de minéralisation de la biomasse,
c) la production
   - mise en oeuvre de la phase de production continue et autonome de charbon végétal avec substitution totale des gaz chauds du générateur par l'introduction exclusive d'air comprimé à température ambiante dans la base de la colonne permettant d'augmenter les transferts thermiques entre les gaz et la biomasse en vue de l'obtention de charbon végétal à haute teneur en carbone et de maintenir la température T2 entre 600°C à 700°C dans la couche de biomasse se situant juste au dessus de la grille, tout en introduisant de l'air comprimé et en procédant à l'évacuation continue de la biomasse transformée en charbon végétal pendant l'ensemble du processus opératoire, tout ceci permettant d'atteindre et de maintenir en continu un rythme accéléré de production avec ajout de biomasse dans le haut du réacteur au fur et à mesure de l'évacuation du charbon végétal à travers la grille en bas de la colonne tout en maintenant la température T3 en haut de la colonne au dessous de 65°C.

Selon une deuxième caractéristique de l'invention, l'installation de mise en oeuvre du procédé selon l'invention du type comprenant des moyens pour la mise en oeuvre des phases de démarrage et d'amorçage incluant un générateur de gaz chauds pauvres en oxygène, en aval, un ventilateur qui entraîne la surpression de gaz chauds dans la partie basse du réacteur, le réacteur comprenant une colonne de grande hauteur dont l'entrée supérieure permet le chargement et introduction de la biomasse en continu et dans sa partie basse, une grille de support et d'évacuation de la charge, et sous jacent une chambre d'injection de gaz en provenance du générateur, et un mécanisme de récupération des produits traités, l'installation comprenant en outre à la sortie des gaz froids en haut de la colonne du réacteur , une chambre thermique de post combustion des gaz évacués, un échangeur de chaleur, un ventilateur, un second échangeur de chaleur et un évent, et des canalisations de liaison permettant la mise en oeuvre du recyclage des gaz avec des liaisons entre le circuit défini par les composants d'une part, et les composants d'autre part, est remarquable en ce que l'installation comprend un autre circuit situé entre le réacteur et le ventilateur qui est défini par un groupe compresseur permettant de fournir de l'air sous pression dans la phase particulière de production, et le remplacement total des gaz chauds provenant du générateur par de l'air comprimé à température ambiante.

Ainsi, par le procédé et son installation de mise en oeuvre, on obtient du charbon végétal, à haute teneur en carbone, sous forme de morceaux, de pellets ou de poudre ou d'autres configurations similaires pouvant ensuite servir à la production de biocarburants de synthèse par exemple.

Pour fixer l'objet de l'invention illustrée d'une manière non limitative aux figures des dessins où :
La figure 1 est une vue à caractère schématique illustrant l'installation de mise en oeuvre du procédé selon l'invention dans sa mise en oeuvre globale.
   - La figure 2 est une vue à caractère schématique de l'installation, selon la figure 1, mais dans des conditions de fonctionnement dans la phase dite d'amorçage, c'est-à-dire de « Charthérisation ».
   - La figure 3 est une vue à caractère schématique de l'installation, selon la figure 1, mais dans des conditions de fonctionnement dans la phase dite de transition.
   - La figure 4 est une vue d'un diagramme illustrant l'élévation de la température T2 dans la colonne en fonction de l'augmentation d'admission d'air ambiant avec la répartition apport de chaleur dudit générateur et support de chaleur du à l'oxydation forcée.
   - La figure 5 est un diagramme par rapport à la hauteur de la colonne et la température, avec l'évolution des courbes en concentration d'oxygène et évolution en température.
   - La figure 6 est une vue à caractère schématique de l'installation, selon la figure 1, mais dans les conditions de fonctionnement dans la phase de production.

Afin de rendre plus concret l'objet de l'invention, on le décrit maintenant d'une manière non limitative aux figures des dessins.

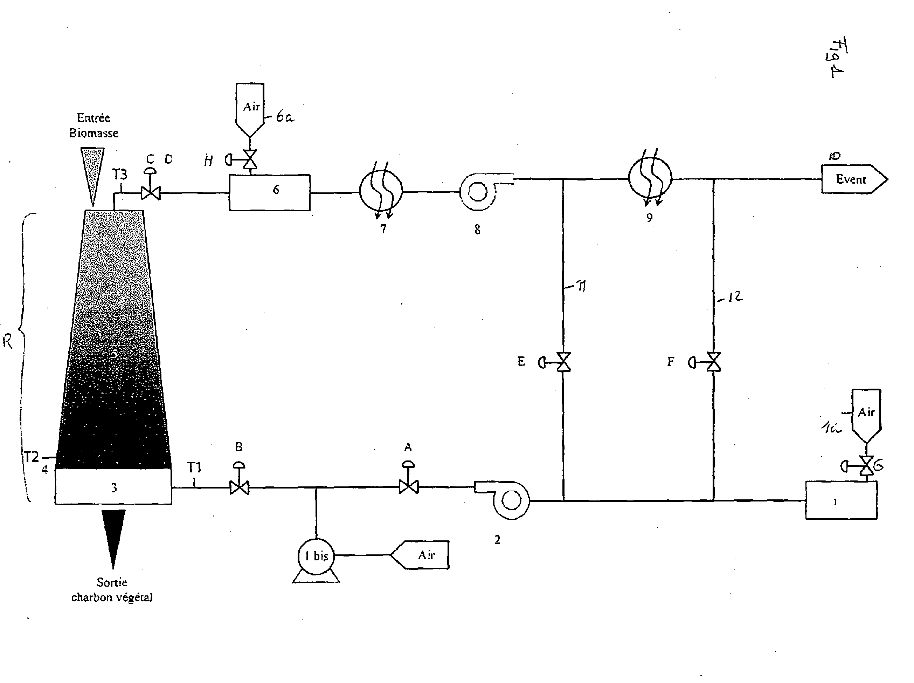

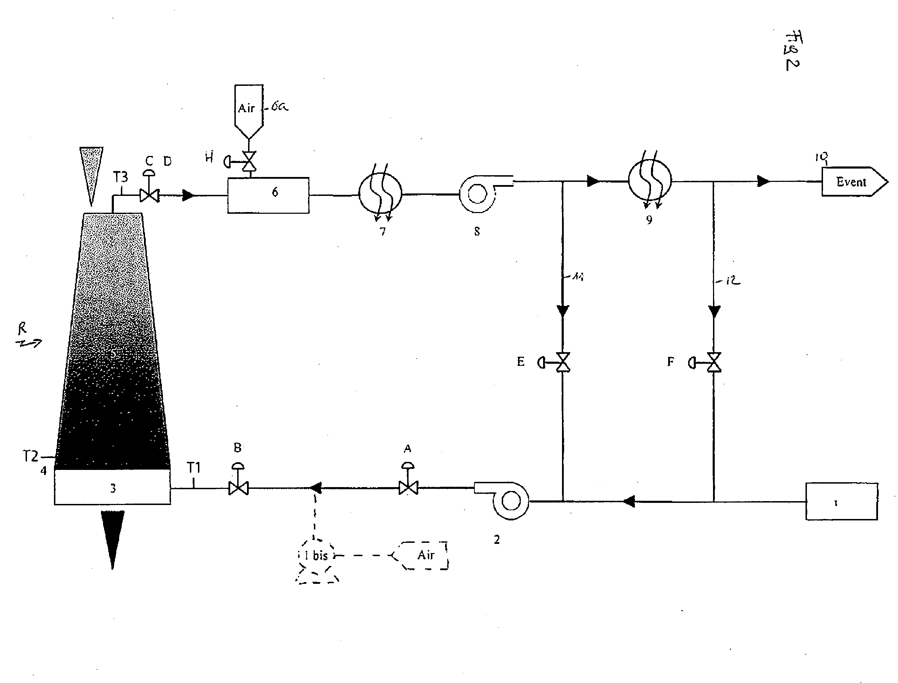

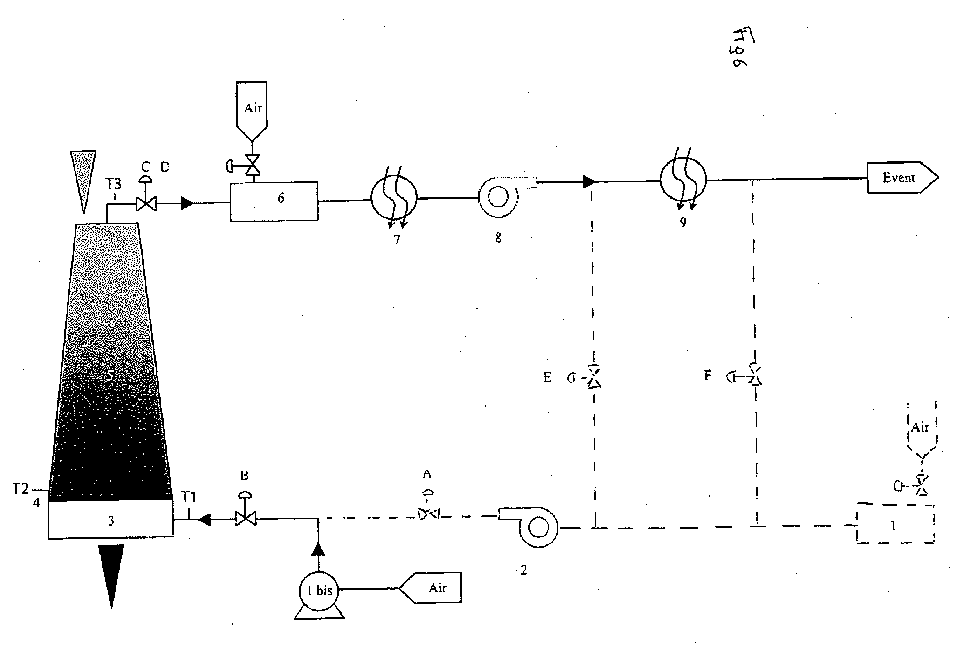

Si la figure 1 représente l'ensemble de l'installation dans sa mise en oeuvre globale, les figures 2, 3, et 6 illustrent ladite installation dans les différentes phases successives de fonctionnement et les parties d'installation non en fonctionnement sont illustrées en traits interrompus courts pour faciliter la compréhension de la mise en oeuvre de l'invention. On distingue donc les phases initiales de mise en fonctionnement de l'installation et celles résultant de son autonomie complète illustrée figure 6.

En se référant à la figure 1, pour la mise en oeuvre de l'initialisation du procédé, l'installation complète de mise en oeuvre du procédé inclut les composants suivants, ceux-ci étant identifiés par ordre successif selon le sens de circulation des gaz. L'installation comprend un générateur de gaz chauds (1) pauvres en oxygène (aux alentours de 1% 02). Ce générateur est associé avec une arrivée d'air (1a) et une vanne (6) de commande. En aval, se trouve un ventilateur (2) qui va entraîner la projection d'une quantité de gaz chauds dans la partie basse du réacteur (R) définie par le type de biomasse à traiter. Ce réacteur comprend ainsi une colonne (5) de grande hauteur dont l'entrée supérieure est surmontée d'un SAS pour l'introduction de la charge de biomasse à travailler pour la récupération de carbone. Dans sa partie basse, le réacteur présente donc une grille (4), et sous jacent la chambre (3) d'injection des gaz en provenance du générateur (1) et de récupération du charbon végétal à haute concentration en carbone. La colonne du réacteur au sein de laquelle se développe le processus de Charthérisation, exposé ci-après, contient ainsi la biomasse préalablement conditionnée en termes de tailles et de géométrie. La colonne (5) présente elle-même un profil géométrique spécifique en forme de cylindre de diamètre progressif de sa partie d'entrée de la biomasse jusqu'à la base au niveau de la grille de support de la biomasse.

On distingue ensuite les autres composants de l'installation à partir de la sortie des gaz en haut de la colonne du réacteur à savoir une chambre thermique (6) de post combustion des gaz évacués, avec une arrivée d'air (6a) gérée par une vanne (H), un échangeur de chaleur (7), un ventilateur (8), un échangeur de chaleur (9) et un évent (10). Des canalisations de liaison (11 - 12) permettent la mise en oeuvre du recyclage des gaz avec, par exemple, des liaisons entre le circuit défini par les composants (1 - 2) (8 - 9) d'une part, et les composants (9 - 10) (1 - 2) d'autre part. L'installation comprend, selon l'invention, un autre circuit situé entre le réacteur (R) et le ventilateur (2) qui est défini par un groupe compresseur (1bis) permettant de fournir de l'air comprimé dans la phase particulière de production ainsi qu'il sera exposé par la suite sur le procédé.

La biomasse agricole non alimentaire provient de tous types de végétaux récoltés et conditionnés préalablement pour être introduits dans le haut de la colonne du réacteur par tous moyens de transfert connus. Ainsi, le procédé de fabrication de charbon végétal à haute teneur en carbone à partir de biomasse agricole non alimentaire solides met en oeuvre plusieurs phases successives d'amorçage de traitement jusqu'à la charthérisation, une phase de transition, pour atteindre la phase de production, qui peut être maintenue en continu pendant un temps indéfini, cette dernière phase étant le coeur de l'invention. Le procédé, selon l'invention, permettant cette fabrication de charbon végétal introduit en effet, par rapport aux connaissances antérieures de l'obtention de carbone à partir de solides organiques, une phase nouvelle après charthérisation, consistant dans l'introduction d'air ambiant sous pression en provenance d'une seconde source de production d'air dans le circuit d'injection des gaz chauds en bas de la colonne du réacteur, en augmentant de ce fait la pression dans cette dernière afin d'accélérer le phénomène de carbonisation.

Il convient dès lors d'exposer le procédé de fabrication de charbon végétal en se référant aux différentes phases successives d'élaboration.

La mise en route et amorçage de l'installation s'effectue par les phases normales de mise en route et fonctionnement d'une installation de "charthérisation.

La phase d'amorçage du procédé est donc celle relative à la charthérisation, c'est-à-dire que les gaz chauds provenant du générateur (1) traversent la colonne de réaction (1) en permettant l'extraction de la partie organique de la matière. Une fois stabilisé, le gradient de température et les différentes réactions ayant lieu dans la colonne de réaction, commence l'extraction de la matière minéralisée en bas de la colonne. En effet, à chaque fois que la température T2 de la couche ou strate de matière végétale située au dessus de la grille (4) égale la température T1 des gaz issus du générateur (1), la grille (4) est manoeuvrée par un moyen de commande approprié pour effectuer des mouvements en va et vient pour permettre l'extraction des produits ainsi traités. Simultanément, on procède au rajout d'une couche ou strate de biomasse dans le haut de la colonne qui est à une température T3 inférieure à 65°C.

Selon la figure 2, dans cette phase, le générateur (1bis) n'est pas actionné et est donc sans effet.

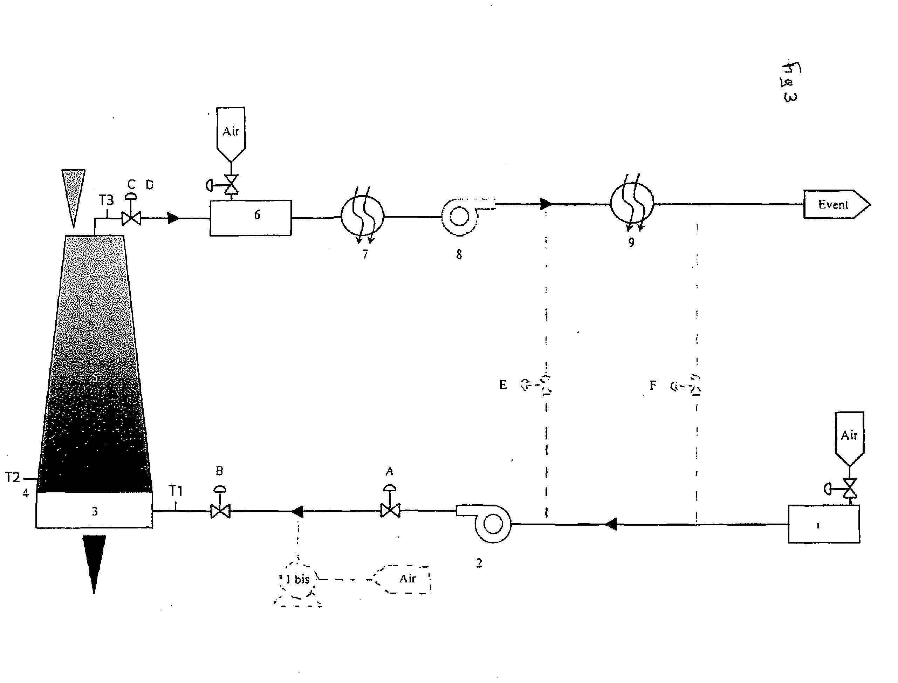

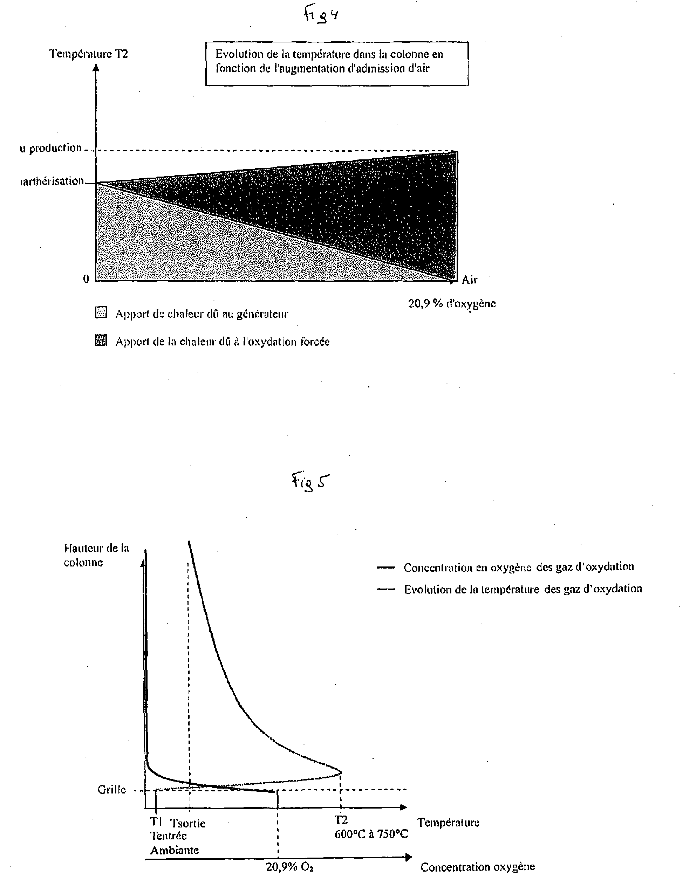

La phase suivante du procédé consiste en une phase de transition qui est représentée à la figure 3 et expliquée par le diagramme de la figure 4. Cette phase de transition a pour but d'introduire de l'air ambiant sous pression dans les gaz chauds (T1 comprise entre 350°C et 400°C) issus du générateur (1). Cette adjonction d'air a pour effet d'abaisser la température T1 et d'oxyder les composés volatiles se trouvant dans les premiers centimètres de la colonne juste au dessus de la grille (4).

Cette oxydation forcée donne une quadruple conséquence, à savoir :
1) Augmenter la température T2 de la strate située juste au-dessus de la grille due à l'oxydation de la matière organique. La température T2 passe alors d'une valeur comprise entre 350°C et 400°C à une valeur comprise entre 600°C et 750°C.
2) Accélérer le processus de minéralisation de la biomasse, l'oxydation forcée de la matière organique par apport d'oxygène étant une réaction très exothermique qui a pour effet d'augmenter la cinétique de la réaction.
3) Consumer la totalité de l'oxygène présent dans les gaz d'injection.
4) Faire baisser progressivement la température des gaz d'injection, au fur et à mesure qu'augmente la proportion d'air dans les gaz chauds. La température T1 passe d'une valeur comprise entre 350°C et 400°C à une température ambiante.

Le diagramme de la figure 4 montre ainsi la réaction de température dans la strate au dessus de la grille, par rapport à l'introduction d'oxygène inhérent à l'air complémentaire initié par le moyen la (1a). Dés l'introduction de l'air complémentaire, T2 évolue du niveau de température de Charthérisation au niveau de température de production. On constate que l'apport de chaleur dû aux gaz chauds du générateur (1) tend à diminuer en proportion alors que l'apport de chaleur dû à l'oxydation forcée se développe.

Selon la figure 1, le compresseur (1bis) n'est toujours pas actionné et est sans effet.

Le diagramme représenté figure 5 montre ainsi les courbes (C1) de concentration en oxygène et (C2) d'évolution de la température en fonction de la hauteur de la colonne du réacteur.

Ainsi, après avoir traversé la grille (4) et les premiers centimètres de matière, les gaz se réchauffent et s'appauvrissent en oxygène. En continuant à progresser vers le haut, les gaz en contact avec la matière ayant entièrement consommé l'oxygène qu'ils contenaient, continuent à transférer de la chaleur au fur et à mesure qu'ils montent dans la colonne du réacteur. Ce transfert de chaleur provoque l'extraction de la partie organique et de la partie aqueuse de la biomasse produisant ainsi la carbonisation de celle-ci.

Durant cette phase, l'évacuation dans la chambre (3) du charbon végétal obtenu, s'effectue toujours par l'actionnement de la grille (4), tandis que la température des gaz provenant du générateur T1 diminue progressivement et lorsque la température des gaz d'injection atteint la température ambiante, commence alors la phase suivante du procédé, c'est-à-dire la phase de production qui consiste à la substitution des gaz provenant du générateur par de l'air comprimé.

Selon la figure 3, le compresseur (1bis) n'est toujours pas actionné et est sans effet.

La phase suivante du procédé est alors celle de la production. Elle est illustrée figure 6 et correspond à la mise en fonctionnement du générateur d'air comprimé (1bis) par une injection d'air comprimé qui se substitue au fonctionnement du générateur (1) de gaz chauds.

La quantité d'oxygène apportée à la colonne (5) est augmentée en accroissant la pression de l'air comprimé dans. Le circuit d'acheminement d'air est donc modifié comme il apparaît figure 6 avec la substitution du générateur de gaz chauds (1) par un compresseur d'air. Cette injection continue d'air comprimé permet de monter jusqu'à une pression de 5 bars en bas de la colonne, et dans le cadre d'un fonctionnement en continu du réacteur. Cette mise en pression a pour effet de densifier le milieu et donc d'augmenter les transferts thermiques entre les gaz et la biomasse et favoriser ainsi la condensation sur les strates supérieures des organiques lourds issus des strates inférieurs de la colonne.

L'évacuation du charbon végétal ainsi produit s'effectue par le biais de la chambre (3) de collecte.

Dans le cadre de fonctionnement en continu et de production du charbon végétal, différents moyens et paramètres permettent de contrôler le procédé ainsi que la qualité de la minéralisation. On vérifie la quantité d'air injectée, la température T2 de consigne de déclenchement de l'agitation, la pression de l'air comprimé injecté, et aussi la pression des gaz au bas de la colonne.

Le contrôle de la combustion et le non dépassement de la température de consigne de T2 est assuré par la maîtrise continue de l'agitation de la grille qui assure le débit d'évacuation du charbon végétal, évitant ainsi la sur gazéification du charbon.

En d'autres termes, une fois les phases opératoires initiales, de charthérisation, et de transition terminées l'installation est en situation de production autogène pour l'obtention de charbon végétal. Cela suggère qu'il y a en combinaison une évacuation en continu des produits carbonés sous forme de charbon végétal, qu'il y a approvisionnement par le haut du réacteur d'une quantité correspondante de biomasse à traiter dans un cycle continu. Cela suggère aussi que le système s'autoalimente avec un maintien et contrôle des températures en particulier au niveau de la partie de biomasse se trouvant immédiatement au dessus du niveau de la grille (4) et correspondant à la strate qui est dans la dernière phase de production de charbon végétal.

Le procédé, selon l'invention, prévoit donc, par rapport à l'art antérieur, de manière nouvelle, une introduction progressive d'air nouveau mélangé aux gaz chauds jusqu'à atteindre un abaissement de la température des gaz pour ensuite passer dans une phase de production continue autonome de charbon végétal par l'introduction d'air comprimé jusqu'à une certaine pression en provenance d'une autre source. Les produits obtenus, selon le procédé de l'invention, sont à très haute teneur en carbone et peuvent être ensuite utilisés dans la fabrication de biocarburants.

L'intérêt de l'invention est donc immédiat en ce qu'il met en oeuvre la récupération de la biomasse agricole non alimentaire de toute nature qui, par définition, est toujours existante et non liée à des phénomènes de marché et parce qu'il permet d'obtenir des produits constituant du charbon végétal pour des applications comme, par exemple, la synthèse de bio carburants.

Un autre intérêt de l'invention réside en ce que le générateur (1) de gaz chauds une fois la mise en production établie, est déconnecté du fonctionnement de l'installation, ce qui diminue les coûts d'énergie liés à son fonctionnement et l'installation de production est autogène.

La production de charbon, à partir de biomasse agricole non alimentaire, apporte des produits tout à fait considérables à la production d'énergie par l'utilisation de ce charbon végétal dans de multiples applications directes ou indirectes, comme par exemple la fabrication de bio fuels, sans considérer les avantages au plan de l'environnement proprement dit.

## Revendications

1. Procédé de fabrication de charbon végétal à haute teneur en carbone **caractérisé en ce qu'**il met en oeuvre les phases suivantes :
a) l'amorçage
- charthérisation qui est une distillation pyrolytique étagée de la biomasse correspondant à la partie organique de la matière due à la circulation des gaz chauds dans la colonne (5) du réacteur (R), avec évacuation de la biomasse traitée par la base du réacteur, lorsque la température T2 de la couche de matière végétale au dessus de la grille (4), en regard du fond du réacteur, atteint la température T1 entre 350°C et 400°C des gaz provenant du générateur de gaz chauds,
b) la transition
- mise en oeuvre progressive dans une phase de transition de l'introduction d'air pour l'enrichissement en oxygène des gaz chauds en provenance du générateur, l'adjonction d'air permettant d'oxyder les composants volatiles se trouvant en bas de la colonne au niveau de la grille et ayant pour fonctionnalité, d'une part, de diminuer la température Tldes gaz du générateur et d'augmenter la température T2 ainsi que la quantité de gaz dûs à l'oxydation des matières organiques et, d'autre part, de provoquer une accélération du processus de minéralisation de la biomasse,
c) la production
- mise en oeuvre de la phase de production continue et autonome de charbon végétal avec substitution totale des gaz chauds du générateur par l'introduction exclusive d'air comprimé dans la base de la colonne permettant d'augmenter les transferts thermiques entre les gaz et la biomasse en vue de l'obtention de charbon végétal à haute teneur en carbone et de maintenir la température T2 entre 600°C et 750°C dans la couche de biomasse se situant juste au dessus de la grille, tout en introduisant de l'air comprimé et en procédant à l'évacuation continue de la biomasse transformée en charbon végétal pendant l'ensemble du processus opératoire, tout ceci permettant d'atteindre et de maintenir en continu un rythme accéléré de production avec ajout de biomasse dans le haut du réacteur au fur et à mesure de l'évacuation du charbon végétal à travers la grille en bas de la colonne tout en maintenant la température T3 en haut de la colonne en dessous de 65°C..

2. Installation de mise en oeuvre du procédé selon la revendication 1, comprenant des moyens pour la mise en oeuvre des phases de démarrage et d'amorçage incluant un générateur (1) de gaz chauds pauvres en oxygène, en aval, un ventilateur (2) qui entraîne la surpression de gaz chauds dans la partie basse du réacteur (R), le réacteur comprenant une colonne (5) de grande hauteur dont l'entrée supérieure permet le chargement et introduction de la biomasse en continu et dans sa partie basse, une grille (4) de support et d'évacuation de la charge, et sous jacent une chambre (3) d'injection de gaz en provenance du générateur, et un mécanisme de récupération des produits traités, l'installation comprenant en outre à la sortie des gaz froid en haut de la colonne du réacteur , une chambre thermique de post combustion (6) des gaz évacués, un échangeur de chaleur (7), un ventilateur (8), un second échangeur de chaleur (9) et un évent (10), et des canalisations de liaison (11-12) permettant la mise en oeuvre du recyclage des gaz avec des liaisons entre le circuit défini par les composants d'une part, et les composants d'autre part, est **caractérisé en ce que** l'installation comprend un autre circuit situé entre le réacteur (5) et le ventilateur (2) qui est défini par un groupe compresseur (1bis) permettant de fournir de l'air sous pression dans la phase particulière de production, et le remplacement des gaz chauds provenant du générateur par de l'air comprimé à température ambiante.

## Claims

1. Method for making vegetable coal with high carbon content **characterized in that** it comprises the following phases:
a) initiation
- chartherisation which is a staged pyrolytic distillation of the biomass equating to the organic matter part obtained by causing hot gases to flow in the column (5) of the reactor (R), with the treated biomass being removed through the reactor base, when the temperature T2 of the vegetable matter layer above the grid (4), facing the reactor bottom, reaches the temperature T1 between 350°C and 400°C of the gases coming from the hot gas generator,
b) transition
- gradual implementation in a transition phase of the introduction of air for the oxygen enrichment of the hot gases coming from the generator, the addition of air allowing the volatile products at the column bottom to oxidize on the grid and having the functionality, on the one hand, of reducing the temperature T1 of the generator gases and increasing the temperature T2 and the quantity of gases due to the organic matter oxidation and, on the other hand, of speeding up the biomass mineralization process,
c) production
- implementation of the continuous and autonomous vegetable coal production phase with total substitution of the generator hot gases by exclusively introducing compressed air into the column base so that heat transfers between gases and biomass can be increased with a view to obtaining vegetable coal with high carbon content and the temperature T2 can be maintained at between 600°C and 750°C in the biomass layer located just above the grid, while compressed air is introduced and the biomass converted into vegetable coal throughout the operating process is continuously removed, all of which allows an expeditious rate of production to be attained and kept up continuously with biomass being added at the top of the reactor as the vegetable coal is removed through the grid at the column bottom while the temperature T3 at the column top is kept below 65°C.

2. Facility for the implementation of the method as claimed in claim 1, including means for implementing the start up and initiation phases including a generator (1) of oxygen-rarefied hot gases, downstream, a ventilator (2) which causes the overpressure of hot gases in the low part of the reactor (R), the reactor including a column (5) of great height whereof the upper inlet is used to continuously load and introduce the biomass and in its lower part, a grid (4) to bear and remove the load, and underneath a chamber (3) for the injection of gases from the generator, and a mechanism for the recovery of treated products, the facility further including at the cold gas outlet at the top of the reactor column, a heat chamber for the post-combustion (6) of the removed gases, a heat exchanger (7), a ventilator (8), a second heat exchanger (9) and a vent (10), and connection pipes (11-12) which can be used for recycling the gases with connections between the circuit defined by the components on the one hand, and the components on the other hand, is **characterized in that** the facility includes another circuit located between the reactor (5) and the ventilator (2) which is defined by a compressor unit (1b) which is used to supply pressurized air in the characteristic production phase, and the replacement of the hot gases from the generator by compressed air at ambient temperature.

## Patentansprüche

1. Verfahren zur Herstellung von pflanzlicher Kohle mit hohem Kohlenstoffgehalt, **dadurch gekennzeichnet, dass** es die nachstehenden Phasen umfasst:
a) einleitende Phase
- "Chartherisation", d.h. eine abgestufte pyrolytische Destillation der Biomasse, die dem organischen Teil des Materials entspricht, durch Umlauf der heißen Gase in der Kolonne (5) des Reaktors (R) mit Abführung der behandelten Biomasse an der Basis des Reaktors, wenn die Temperatur T2 der Pflanzenmaterialschicht oberhalb des dem Boden des Reaktors gegenüberliegenden Rostes (4) die Temperatur T1 zwischen 350°C und 400°C der vom Heißgasgenerator kommenden Gase erreicht,
b) Übergangsphase
- in einer Übergangsphase zunehmende Einleitung von Luft zu Anreicherung der vom Generator kommenden heißen Gase mit Sauerstoff, wobei durch die Hinzufügung von Luft die flüchtigen Bestandteile, die sich unten an der Kolonne im Bereich des Rostes befinden, oxidiert werden, um einerseits die Temperatur T1 der Generatorgase zu verringern und die Temperatur T2 sowie die Gasmenge aufgrund der Oxidation der organischen Stoffe zu erhöhen und andererseits eine Beschleunigung des Mineralisienmgsprozesses der Biomasse zu bewirken,
c) Produktionsphase
- kontinuierliche und selbständige Produktion von pflanzlicher Kohle mit völligem Ersatz der heißen Gase des Generators durch die ausschließliche Einführung von Druckluft in das Basisteil der Kolonne, wodurch der Wärmetransfer zwischen den Gasen und der Biomasse gesteigert wird, um pflanzliche Kohle mit hohem Kohlenstoffgehalt zu gewinnen und die Temperatur T2 in der Biomasseschicht direkt oberhalb des Rostes zwischen 600°C und 750°C zu halten, wobei während des gesamten Prozesses Druckluft eingeführt und die in pflanzliche Kohle umgewandelte Biomasse kontinuierlich abtransportiert wird, wodurch ein beschleunigter Produktionsrhythmus erreicht und kontinuierlich aufrechterhalten wird, mit Zugabe von Biomasse oben im Reaktor nach Maßgabe der Abführung der pflanzlichen Kohle durch den Rost unten an der Kolonne und bei Aufrechterhaltung der Temperatur T3 oben an der Kolonne unter 65°C.

2. Anlage für die Umsetzung des Verfahrens nach Anspruch 1 mit Einrichtungen für die Durchführung der Anlauf- und Auslösungsphasen einschließlich einem nachgeschalteten Generator (1) von sauerstoffarmen heißen Gasen, einem Ventilator (2), der den Heißgasüberdruck im unteren Teil des Reaktors (R) bewirkt, wobei der Reaktor eine hohe Kolonne (5), deren oberer Eingang die kontinuierliche Beschickung und Einführung der Biomasse ermöglicht, und in seinem unteren Teil einen Rost (4) für die Auflage und Abführung des Einsatzmaterials, darunter eine Kammer (3) für die Einspritzung von vom Generator kommenden Gas und einen Mechanismus für die Aufnahme der behandelten Produkte umfasst, wobei die Anlage außerdem am Auslass der kalten Gase oben an der Kolonne des Reaktors eine thermische Nachbrennkammer (6) für die abgeleiteten Gase, einen Wärmetausche (7), einen Ventilator (8), einen zweiten Wärmetauscher (9) und eine Entlüftung (10) umfasst, außerdem Verbindungsleitungen (11-12) für die Rückführung der Gase mit Verbindungen zwischen dem von den Komponenten einerseits und den Komponenten andererseits beschriebenen Kreislauf, **dadurch gekennzeichnet, dass** die Anlage einen weiteren Kreislauf umfasst, der sich zwischen dem Reaktor (5) und dem Ventilator (2) befindet und aus einem Verdichteraggregat (1bis) besteht, das in der besonderen Produktionsphase die unter Druck stehende Luft liefert und für den Austausch der vom Generator kommenden heißen Gase durch Druckluft bei Raumtemperatur sorgt.
